# EUROPEAN PATENT APPLICATION

(11) **EP 4 757 050 A1**
(43) Date of publication of application: **10.06.2026**
(21) Application number: 25214894.5
(22) Date of filing: 11.11.2025
(51) Int. Cl.: H01M 50/538, H01M 50/105, H01M 4/139, H01M 50/536

(54) **POWER STORAGE DEVICE**

(30) Priority: 06.12.2024 JP 2024213046
(71) Applicant: Prime Planet Energy & Solutions, Inc., Tokyo 103-0022 (JP)
(72) Inventor: OSHIMA, Kazuki, Tokyo, 103-0022 (JP)
(74) Representative: Kuhnen & Wacker Patent- und Rechtsanwaltsbüro PartG mbB

(57) **Abstract**

A power storage device includes: an electrode assembly (200) including a first electrode (240), a second electrode (210) having a polarity different from a polarity of the first electrode (240), and a first electrode tab group (250, 280) electrically connected to the first electrode (240); a case (100) that accommodates the electrode assembly (200); a first conductive member (420) connected to the first electrode tab group (250, 280); a second conductive member (440) connected to the first conductive member (420); and an insulating member (460) disposed between the first conductive member (420) and the second conductive member (440), wherein the first electrode tab group (250, 280) is located at one end portion of the electrode assembly (200), and the insulating member (460) is connected to the first conductive member (420).

## Description

### CROSS REFERENCE TO RELATED APPLICATIONS

This nonprovisional application is based on Japanese Patent Application No. 2024-213046 filed on December 6, 2024 with the Japan Patent Office, the entire contents of which are hereby incorporated by reference.

### BACKGROUND OF THE INVENTION

### Field of the Invention

The present technology relates to a power storage device.

### Description of the Background Art

Japanese Patent No. 4537353 discloses a prismatic secondary battery in which an electrode group (25) is accommodated in a case (14) provided with openings (14a, 14b) at both ends thereof and electrode terminals (21, 23) are respectively attached to cap plates (33, 33') that seal the openings (14a, 14b).

### SUMMARY OF THE INVENTION

In a power storage device, a conductive connection portion is formed. It is required to improve reliability of the conductive connection portion. From this viewpoint, the battery described in Japanese Patent No. 4537353 still has room for improvement.

An object of the present technology is to provide a power storage device having high reliability.

The present technology provides the following power storage device.
[1] A power storage device comprising: an electrode assembly including a first electrode, a second electrode having a polarity different from a polarity of the first electrode, and a first electrode tab group electrically connected to the first electrode; a case that accommodates the electrode assembly; a first conductive member connected to the first electrode tab group; a second conductive member connected to the first conductive member; and an insulating member disposed between the first conductive member and the second conductive member, wherein the first electrode tab group is located at one end portion of the electrode assembly, and the insulating member is connected to the first conductive member.
[2] The power storage device according to [1], wherein the first conductive member includes a first plate-shaped portion, the insulating member includes a second plate-shaped portion, and the first plate-shaped portion of the first conductive member is disposed to overlap the second plate-shaped portion of the insulating member.
[3] The power storage device according to [1] or [2], wherein the first conductive member has a first end portion, the second conductive member has a second end portion adjacent to the first end portion, and a welding portion that joins the first conductive member and the second conductive member is formed at the first end portion and the second end portion.
[4] The power storage device according to any one of [1] to [3], wherein the first conductive member is provided with a first through hole, the insulating member has a first projection, and a fixing portion that fixes the first conductive member and the insulating member to each other is formed by the first projection being disposed in the first through hole.
[5] The power storage device according to [4], wherein the first conductive member is provided with a second through hole, the insulating member has a second projection, and the second projection is disposed in the second through hole so as to form a clearance between an outer surface of the second projection and an inner surface of the second through hole.
[6] The power storage device according to [4] or [5], wherein the first conductive member has an outer surface located on a side opposite to the insulating member, the first projection has a first portion disposed in the first through hole, and a second portion that has an outer diameter larger than an outer diameter of the first portion and that is disposed on a tip side of the first projection with respect to the first portion, the second portion is disposed on an outer side with respect to the first through hole of the first conductive member, and the second portion of the first projection and the outer surface of the first conductive member are in abutment with each other or face each other with a clearance of 0.5 mm or less being interposed between the second portion of the first projection and the outer surface of the first conductive member.
[7] The power storage device according to any one of [4] to [6], wherein a plurality of the fixing portions are provided.
[8] The power storage device according to any one of [1] to [7], wherein the first conductive member has a first end portion, and is provided with a first through hole and a second through hole, the second conductive member has a second end portion adjacent to the first end portion, a first projection, and a second projection, a welding portion that joins the first conductive member and the second conductive member is formed at the first end portion and the second end portion, a fixing portion that fixes the first conductive member and the insulating member to each other is formed by the first projection being disposed in the first through hole, the second projection is disposed in the second through hole so as to form a clearance between an outer surface of the second projection and an inner surface of the second through hole, and the first through hole is disposed close to the welding portion with respect to the second through hole.
[9] The power storage device according to any one of [1] to [8], wherein a joining portion between the first conductive member and the second conductive member is provided on one end portion side of each of the first conductive member and the second conductive member, the first conductive member protrudes on a side opposite to the joining portion with respect to the insulating member, and the insulating member protrudes on the side opposite to the joining portion with respect to the second conductive member.
[10] The power storage device according to any one of [1] to [9], wherein the first conductive member has an outer surface located on a side opposite to the insulating member, the insulating member has a claw portion facing the outer surface of the first conductive member, and a fixing portion that fixes the first conductive member and the insulating member to each other is formed by the claw portion.
[11] The power storage device according to any one of [1] to [10], wherein the first electrode tab group includes a first tab group and a second tab group that are separately formed, the first conductive member includes a first member and a second member provided as separate members, the first member is joined to the first tab group, and the second member is joined to the second tab group, and the first member and the second member are connected to one insulating member.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a front view showing a configuration of a secondary battery according to an embodiment.
Fig. 2 is a diagram showing a state in which the secondary battery shown in Fig. 1 is viewed in a direction of arrow II.
Fig. 3 is a diagram showing a state in which the secondary battery shown in Fig. 1 is viewed in a direction of arrow III.
Fig. 4 is a diagram showing a state in which the secondary battery shown in Fig. 1 is viewed in a direction of arrow IV.
Fig. 5 is a diagram showing a state in which the secondary battery shown in Fig. 1 is viewed in a direction of arrow V.
Fig. 6 is a front cross sectional view of the secondary battery shown in Fig. 1.
Fig. 7 is a cross sectional view of a negative electrode plate.
Fig. 8 is a front view showing the negative electrode plate.
Fig. 9 is a cross sectional view of a positive electrode plate.
Fig. 10 is a front view showing the positive electrode plate.
Fig. 11 is a cross sectional view of the secondary battery shown in Fig. 1 along XI-XI.
Fig. 12 is a cross sectional view of the secondary battery shown in Fig. 1 along XII-XII.
Fig. 13 is a flowchart showing a method of manufacturing the secondary battery according to one embodiment.
Fig. 14 is a perspective view showing a state before two electrode assemblies included in the secondary battery according to one embodiment are overlapped with each other.
Fig. 15 is a cross sectional view of each of electrode assemblies and current collectors shown in Fig. 14 along XV-XV.
Fig. 16 is a perspective view showing a state of attaching a holder and a spacer to the electrode assembly.
Fig. 17 is a perspective view showing a state of attaching a sealing plate to the current collectors on the negative electrode side.
Fig. 18 is a cross sectional view of each of the electrode assemblies and the current collectors shown in Fig. 17 along XVIII-XVIII.
Fig. 19 is a perspective view showing a state of attaching a sealing plate to the current collector on the positive electrode side.
Fig. 20 is a perspective view showing the configuration of the secondary battery.
Fig. 21 is a front view showing a state in which first conductive members are connected to an insulating member.
Fig. 22 is a front view showing a state in which one of the two first conductive members is removed from the state shown in Fig. 21.
Fig. 23 is a diagram showing the state shown in Fig. 22 when viewed from the opposite side (rear side).
Fig. 24 is a perspective view showing the state of each of Figs. 22 and 23.
Fig. 25 is a perspective view showing the first conductive member.
Fig. 26 is a diagram showing the first conductive members and the insulating member in a cross section along XXVI-XXVI of Fig. 22.
Fig. 27 is a diagram showing the first conductive members and the insulating member in a cross section along XXVII-XXVII of Fig. 22.
Fig. 28 is a front view showing the insulating member.
Fig. 29 is a front view showing a state in which a second conductive member is attached to the insulating member.
Fig. 30 is a perspective view showing the state in which the second conductive member is attached to the insulating member.
Fig. 31 is a diagram showing a current collection structure on the positive electrode side.
Fig. 32 is a diagram showing a step of forming a joining portion between the conductive members.
Fig. 33 is a diagram showing the joining portion formed by the step shown in Fig. 32.
Fig. 34 is a diagram showing a dimensional relation between a second through hole and a second projection.
Fig. 35 is a diagram showing a modification of a connection portion between the current collector and the insulating member.

### DESCRIPTION OF THE PREFERRED EMBODIMENTS

Hereinafter, embodiments of the present technology will be described. It should be noted that the same or corresponding portions are denoted by the same reference characters, and may not be described repeatedly.

It should be noted that in the embodiments described below, when reference is made to number, amount, and the like, the scope of the present technology is not necessarily limited to the number, amount, and the like unless otherwise stated particularly. Further, in the embodiments described below, each component is not necessarily essential to the present technology unless otherwise stated particularly. Further, the present technology is not limited to one that necessarily exhibits all the functions and effects stated in the present embodiment.

It should be noted that in the present specification, the terms "comprise", "include", and "have" are open-end terms. That is, when a certain configuration is included, a configuration other than the foregoing configuration may or may not be included.

Also, in the present specification, when geometric terms and terms representing positional/directional relations are used, for example, when terms such as "parallel", "orthogonal", "obliquely at 45°", "coaxial", and "along" are used, these terms permit manufacturing errors or slight fluctuations. In the present specification, when terms representing relative positional relations such as "upper side" and "lower side" are used, each of these terms is used to indicate a relative positional relation in one state, and the relative positional relation may be reversed or turned at any angle in accordance with an installation direction of each mechanism (for example, the entire mechanism is reversed upside down).

Moreover, sizes such as width, length, and diameter of each member illustrated in the present specification are not limited to those shown in the figures, and can be appropriately changed. In the present specification, ordinal numbers such as "first" and "second" may be given to respective configurations, but these ordinal numbers do not limit priority, order, or the like unless explicitly defined.

In the present specification, the term "battery" is not limited to a lithium ion battery, and may include other batteries such as a nickel-metal hydride battery and a sodium-ion battery. In the present specification, the term "electrode" may collectively represent a positive electrode and a negative electrode. Further, the term "electrode plate" may collectively represent a positive electrode plate and a negative electrode plate.

In the present specification, when the terms "power storage device", "power storage cell", or "power storage module" is used, the "power storage device", the "power storage cell", or the "power storage module" is not limited to a battery, a battery cell or a battery module, and may include a capacitor, a capacitor cell, or a capacitor module.

The "battery cell" can be mounted on vehicles such as a hybrid electric vehicle (HEV), a plug-in hybrid electric vehicle (PHEV), and a battery electric vehicle (BEV). It should be noted that the use of the "battery cell" is not limited to the use in a vehicle.

In the present specification, the X direction may be referred to as a "width direction" of each of the secondary battery, the electrode assembly, and the case main body, the Z direction may be referred to as a "height direction" of the secondary battery or the case main body, and the Y direction may be referred to as a "thickness direction" of the secondary battery or the case main body.

### (Overall Configuration of Secondary Battery)

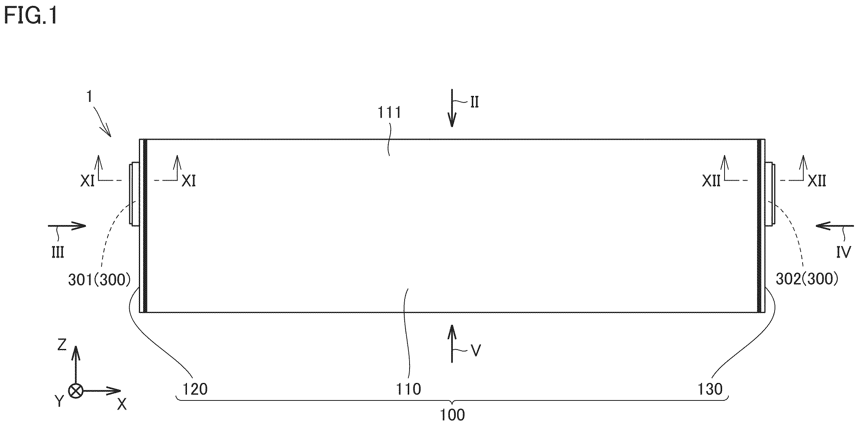

The overall configuration of secondary battery 1 will be described with reference to Figs. 1 to 6. Secondary battery 1 includes a case 100, an electrode assembly 200, electrode terminals 300, and current collectors 400. Case 100 includes a case main body 110, a sealing plate 120, and a sealing plate 130.

When forming a battery assembly including secondary battery 1, a plurality of secondary batteries 1 are stacked in the thickness direction of each of the plurality of secondary batteries 1. Secondary batteries 1 stacked may be restrained in the stacking direction (Y direction) by a restraint member to form a battery module, or the battery assembly may be directly supported by a side surface of a case of a battery pack without using the restraint member.

Case main body 110 is constituted of a member having a tubular shape, preferably, a prismatic tubular shape. Thus, secondary battery 1 having a prismatic shape is obtained. Case main body 110 is composed of a metal. Specifically, case main body 110 is composed of aluminum, an aluminum alloy, iron, an iron alloy, or the like.

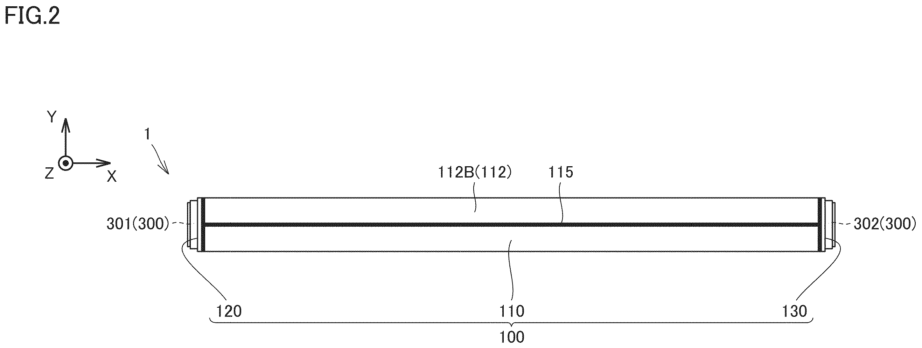

As shown in Figs. 1 and 2, sealing plate 120 and sealing plate 130 are provided at respective end portions of the case main body. Case main body 110 can be formed to have a prismatic tubular shape in, for example, the following manner: end sides of a plate-shaped member having been bent are brought into abutment with each other (joining portion 115 illustrated in Fig. 2) and are joined together (for example, energy ray application such as laser welding is favorable). Each of the corners of the "prismatic tubular shape" may have a shape with a curvature. The secondary battery in the present technology is not necessarily limited to the prismatic secondary battery.

In the present embodiment, case main body 110 is formed to be longer in the width direction (X direction) of secondary battery 1 than in each of the thickness direction (Y direction) and the height direction (Z direction) of secondary battery 1. The size (width) of case main body 110 in the X direction is preferably about 30 cm or more. In this way, secondary battery 1 can be formed to have a relatively large size (high capacity). The size (height) of case main body 110 in the Z direction is preferably about 20 cm or less, more preferably about 15 cm or less, and further preferably about 10 cm or less. Thus, (low-height) secondary battery 1 having a relatively low height can be formed, thus resulting in improved ease of mounting on a vehicle, for example.

Case main body 110 includes a pair of first side surface portions 111 and a pair of second side surface portions 112. The pair of first side surface portions 111 constitute parts of the side surfaces of case 100. The pair of second side surface portions 112 constitute the bottom surface portion and upper surface portion of case 100. The pair of first side surface portions 111 and the pair of second side surface portions 112 are provided to intersect each other. The pair of first side surface portions 111 and the pair of second side surface portions 112 are connected at their respective end portions. Each of the pair of first side surface portions 111 desirably has an area larger than that of each of the pair of second side surface portions 112.

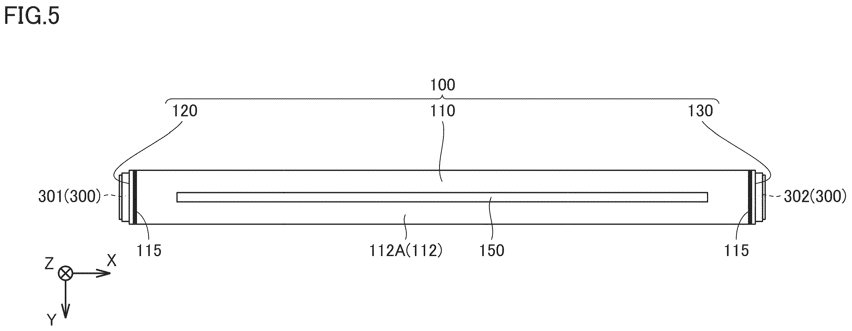

As shown in Fig. 5, a gas-discharge valve 150 is provided in one second side surface portion 112A of the pair of second side surface portions 112. Gas-discharge valve 150 extends in the width direction (X direction) of secondary battery 1. Gas-discharge valve 150 extends from the center of case main body 110 in the X direction to such an extent that gas-discharge valve 150 does not reach both ends of case main body 110 in the X direction. The shape of gas-discharge valve 150 can be changed appropriately.

The thickness of the plate-shaped member in gas-discharge valve 150 is thinner than the thickness of the plate-shaped member of case main body 110 other than gas-discharge valve 150. Thus, when the pressure in case 100 becomes equal to or more than a predetermined value, gas-discharge valve 150 is fractured prior to the other portions of case main body 110, thereby discharging the gas in case 100 to the outside.

As shown in Fig. 2, joining portion 115 is formed at the other second side surface portion 112B of the pair of second side surface portions 112. Joining portion 115 extends in the width direction (X direction) of secondary battery 1. At joining portion 115, the end sides of the plate-shaped member constituting case main body 110 are joined to each other.

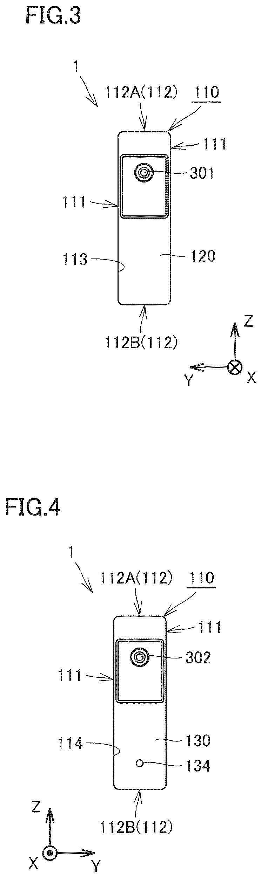

As shown in Fig. 3, an opening 113 (second opening) is provided at an end portion of case main body 110 on one side in the first direction (X direction). Opening 113 is sealed by sealing plate 120 (second sealing plate). Joining portion 115 is formed at opening 113 so as to seal opening 113. Each of opening 113 and sealing plate 120 has a substantially rectangular shape in which the Y direction corresponds to its short-side direction and the Z direction corresponds to its long-side direction. The substantially rectangular shape includes a rectangular shape or a generally rectangular shape such as a rectangular shape having corners each with a curvature.

A negative electrode terminal 301 (second electrode terminal) is provided on sealing plate 120. The position of negative electrode terminal 301 can be appropriately changed.

As shown in Fig. 4, an opening 114 (first opening) is provided at an end portion of case main body 110 on the other side opposite to the first side in the X direction. That is, opening 114 is located at an end portion opposite to opening 113, and openings 113 and 114 face each other. Opening 114 is sealed by sealing plate 130 (first sealing plate). Joining portion 115 is formed at opening 114 so as to seal opening 114. Each of opening 114 and sealing plate 130 has a substantially rectangular shape in which the Y direction corresponds to its short-side direction and the Z direction corresponds to its long-side direction.

Sealing plate 130 is provided with a positive electrode terminal 302 (first electrode terminal) and an injection hole 134. Injection hole 134 may have a size with which an electrolyte solution can be injected into case 100, and is desirably smaller than a hole used for insertion of positive electrode terminal 302 and provided in sealing plate 130. Injection hole 134 is desirably disposed to be deviated from the center of sealing plate 130 in the Z direction. The positions of positive electrode terminal 302 and injection hole 134 can be appropriately changed.

Each of sealing plate 120 and sealing plate 130 is composed of a metal. Specifically, each of sealing plate 120 and sealing plate 130 is composed of aluminum, an aluminum alloy, iron, an iron alloy, or the like.

Negative electrode terminal 301 is electrically connected to a negative electrode (second electrode) of electrode assembly 200. Negative electrode terminal 301 is attached to sealing plate 120, i.e., case 100.

Positive electrode terminal 302 is electrically connected to a positive electrode (first electrode) of electrode assembly 200. Positive electrode terminal 302 is attached to sealing plate 130, i.e., case 100.

Negative electrode terminal 301 is composed of a conductive material (more specifically, a metal), and can be composed of copper, a copper alloy, or the like, for example. A portion or layer composed of aluminum or an aluminum alloy may be provided at a portion of an outer surface of negative electrode terminal 301.

Positive electrode terminal 302 is composed of a conductive material (more specifically, a metal), and can be composed of aluminum, an aluminum alloy, or the like, for example.

Injection hole 134 is sealed by a sealing member (not shown). As the sealing member, for example, a blind rivet or another metal member can be used.

Electrode assembly 200 is an electrode assembly having a flat shape and having a below-described negative electrode plate and a below-described positive electrode plate stacked on each other. Specifically, electrode assembly 200 is a stacked type electrode assembly in which a plurality of negative electrode plates and a plurality of positive electrode plates are alternately stacked with a separator being interposed therebetween. The separator may be formed by folding a strip-shaped insulating sheet member in a meandering manner, or may be formed by individually providing a plurality of divided insulating sheets. In the present specification, the "electrode assembly" is not limited to the stacked type electrode assembly, and may be a wound type electrode assembly in which a strip-shaped negative electrode plate and a strip-shaped positive electrode plate are wound together with a strip-shaped separator being interposed therebetween. The separator can be constituted of, for example, a microporous membrane composed of polyolefin. When the electrode assembly is the stacked type electrode assembly including the plurality of negative electrode plates and the plurality of positive electrode plates, negative electrode tabs (second electrode tabs) provided on the negative electrode plates may be stacked to form a negative electrode tab group (second electrode tab group), and positive electrode tabs (first electrode tabs) provided on the positive electrode plates may be stacked to form a positive electrode tab group (first electrode tab group).

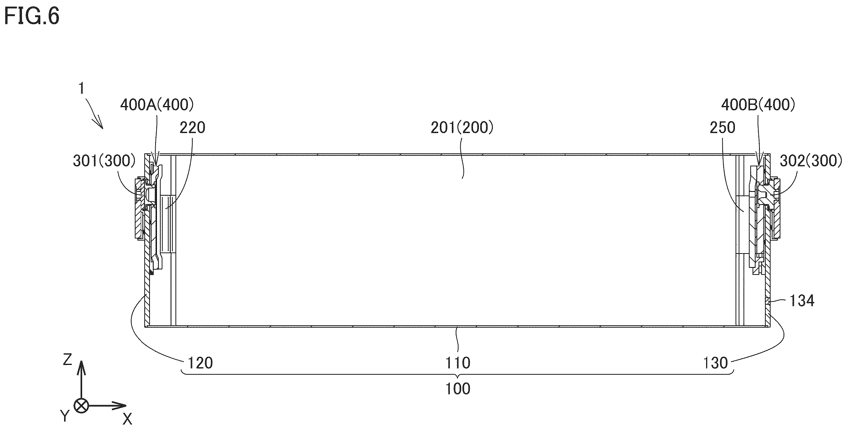

As shown in Fig. 6, case 100 accommodates electrode assembly 200. Fig. 6 illustrates a first electrode assembly 201 described below. First electrode assembly 201 is accommodated in case 100 such that the long-side direction thereof is parallel to the X direction.

Specifically, one or a plurality of the stacked type electrode assemblies and the electrolyte solution (electrolyte) (not shown) are accommodated inside a below-described insulating sheet 700 disposed in case 100. As the electrolyte solution (non-aqueous electrolyte solution), it is possible to use, for example, a solution obtained by dissolving LiPF₆ at a concentration of 1.2 mol/L in a non-aqueous solvent obtained by mixing ethylene carbonate (EC), ethyl methyl carbonate (EMC), and dimethyl carbonate (DMC) at a volume ratio (25°C) of 30:30:40. Instead of the electrolyte solution, a solid electrolyte may be used.

Electrode assembly 200 includes first electrode assembly 201. First electrode assembly 201 includes a main body portion having a substantially rectangular shape, a negative electrode tab group 220, and a positive electrode tab group 250.

The main body portion is constituted of a below-described negative electrode plate 210 and a below-described positive electrode plate 240. Negative electrode tab group 220 is located at an end portion (second end portion) of first electrode assembly 201 on one side (the sealing plate 120 side) with respect to the main body portion thereof in the X direction. Positive electrode tab group 250 is located at an end portion (first end portion) of first electrode assembly 201 on the other side (the sealing plate 130 side) with respect to the main body portion thereof in the X direction.

Each of negative electrode tab group 220 and positive electrode tab group 250 is formed to protrude from a central portion of electrode assembly 200 toward sealing plate 120 or sealing plate 130.

Current collectors 400 include a negative electrode current collector 400A and a positive electrode current collector 400B. Each of negative electrode current collector 400A and positive electrode current collector 400B is constituted of a plate-shaped member. Electrode assembly 200 is electrically connected to negative electrode terminal 301 and positive electrode terminal 302 through current collectors 400.

Negative electrode current collector 400A is disposed on sealing plate 120 with an insulating member composed of a resin being interposed therebetween. Negative electrode current collector 400A is electrically connected to negative electrode tab group 220 and negative electrode terminal 301. Negative electrode current collector 400A is composed of a conductive material (more specifically, a metal), and can be composed of copper, a copper alloy, or the like, for example. Details of negative electrode current collector 400A will be described later.

Positive electrode current collector 400B is disposed on sealing plate 130 with an insulating member composed of a resin being interposed therebetween. Positive electrode current collector 400B is electrically connected to positive electrode tab group 250 and positive electrode terminal 302. Positive electrode current collector 400B is composed of a conductive material (more specifically, a metal), and can be composed of aluminum, an aluminum alloy, or the like, for example. Positive electrode tab group 250 may be electrically connected to sealing plate 130 directly or via positive electrode current collector 400B. In this case, sealing plate 130 may serve as positive electrode terminal 302. Details of positive electrode current collector 400B will be described later.

### (Configuration of Electrode Assembly 200)

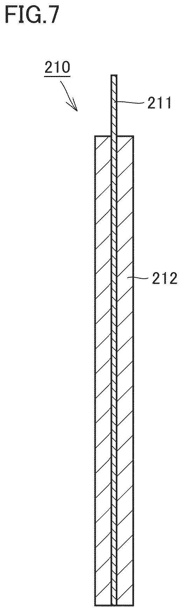

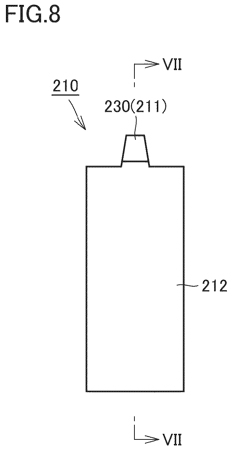

As shown in Figs. 7 and 8, a negative electrode tab 230 constituted of a negative electrode core body 211 is provided at one end portion of negative electrode plate 210 in the width direction. When negative electrode plates 210 are stacked, a plurality of negative electrode tabs 230 are stacked to form negative electrode tab group 220. Negative electrode tab group 220 is electrically connected to the negative electrode. The length of each of negative electrode tabs 230 in the plurality of negative electrode plates 210 in the protruding direction is appropriately adjusted in consideration of the state in which negative electrode tab group 220 is connected to negative electrode current collector 400A. The shape of negative electrode tab 230 is not limited to the one illustrated in Fig. 8.

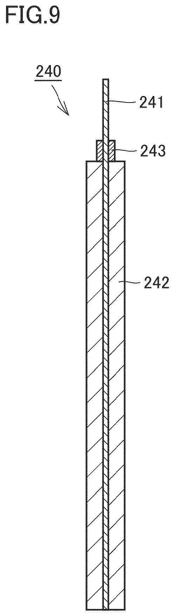

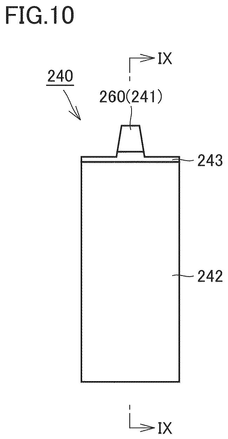

As shown in Figs. 9 and 10, a positive electrode tab 260 constituted of a positive electrode core body 241 is provided at one end portion of positive electrode plate 240 in the width direction. When positive electrode plates 240 are stacked, a plurality of positive electrode tabs 260 are stacked to form positive electrode tab group 250. Positive electrode tab group 250 is electrically connected to the positive electrode. The length of each of positive electrode tabs 260 in the plurality of positive electrode plates 240 in the protruding direction is appropriately adjusted in consideration of the state in which positive electrode tab group 250 is connected to positive electrode current collector 400B. The shape of positive electrode tab 260 is not limited to the one illustrated in Fig. 10.

A positive electrode protective layer 243 is provided at the root of positive electrode tab 260. Positive electrode protective layer 243 may not necessarily be provided at the root of positive electrode tab 260.

In a typical example, the thickness of (one) negative electrode tab 230 is smaller than the thickness of (one) positive electrode tab 260. In this case, the thickness of negative electrode tab group 220 is smaller than the thickness of positive electrode tab group 250.

### (Connection Structure between Electrode Assembly 200 and Current Collector 400)

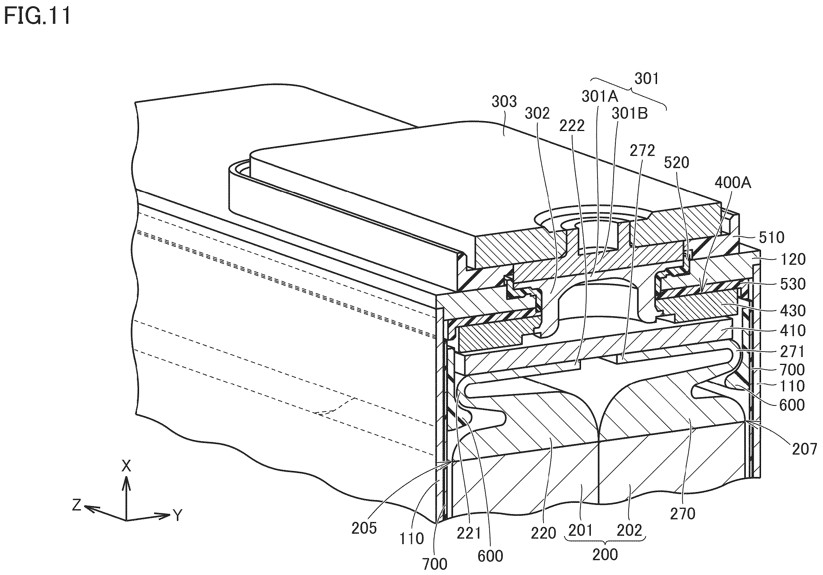

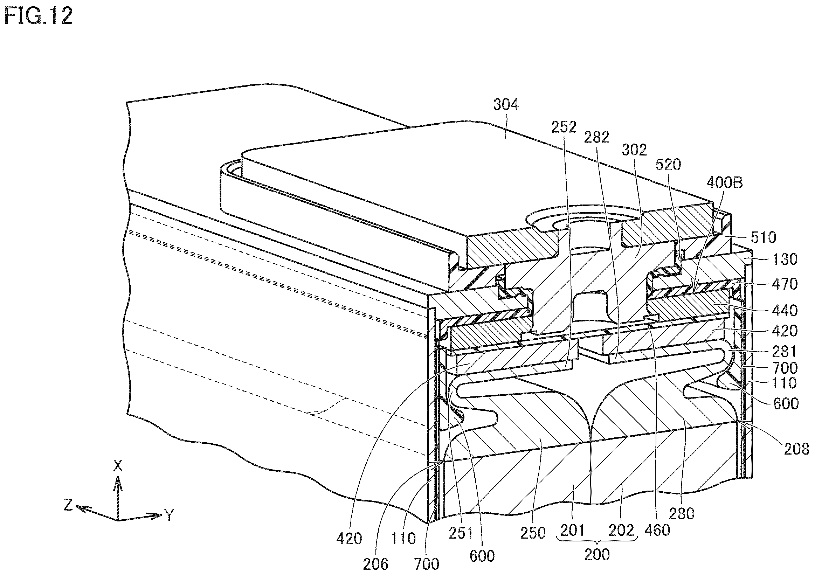

A connection structure between electrode assembly 200 and current collector 400 will be described with reference to Figs. 11 and 12.

As shown in Figs. 11 and 12, electrode assembly 200 includes first electrode assembly 201 and a second electrode assembly 202. Each of first electrode assembly 201 and second electrode assembly 202 includes a positive electrode and a negative electrode. Electrode assembly 200 may be constituted of three or more electrode assemblies.

Electrode assembly 200 is formed by overlapping first electrode assembly 201 and second electrode assembly 202 with each other. First electrode assembly 201 and second electrode assembly 202 are arranged side by side in the thickness direction (Y direction) of each of first electrode assembly 201 and second electrode assembly 202.

As shown in Fig. 11 (connection structure on the negative electrode side), first electrode assembly 201 includes negative electrode tab group 220. Negative electrode tab group 220 is electrically connected to a current collector 410 (negative electrode current collector) at its first end portion 205 in the X direction. Second electrode assembly 202 includes a negative electrode tab group 270. Negative electrode tab group 270 is electrically connected to current collector 410 (negative electrode current collector) at its third end portion 207 in the X direction.

Negative electrode tab group 220 has a curved portion 221 and a tip portion 222. Curved portion 221 is a portion at which negative electrode tab group 220 is curved. Tip portion 222 is a portion of negative electrode tab group 220 located at its end portion.

Negative electrode tab group 270 has a curved portion 271 and a tip portion 272. Curved portion 271 is a portion at which negative electrode tab group 270 is curved. Tip portion 272 is a portion of negative electrode tab group 270 located at its end portion.

Negative electrode tab group 220 and negative electrode tab group 270 are curved in opposite directions such that tip portions 222, 272 are close to each other. Tip portions 222, 272 are separated from each other in the present embodiment; however, it is not limited to this configuration, and tip portions 222, 272 may be in contact with each other.

Negative electrode current collector 400A electrically connects negative electrode terminal 301 to negative electrode tab group 220 and negative electrode tab group 270. Negative electrode current collector 400A in the present embodiment is connected to negative electrode terminal 301 between electrode assembly 200 and sealing plate 120. Negative electrode current collector 400A includes current collector 410 and a current collector 430.

Current collector 410 is a plate-shaped member. Current collector 410 has a long-side direction in the Z direction and a short-side direction in the Y direction. Current collector 410 is constituted of a single component in one piece. Current collector 430 is a plate-shaped member. Current collector 430 has a long-side direction in the Z direction and a short-side direction in the Y direction. Current collector 410 and current collector 430 are arranged side by side in parallel in the X direction. In this way, current collector 410 and current collector 430 are constituted of separate components.

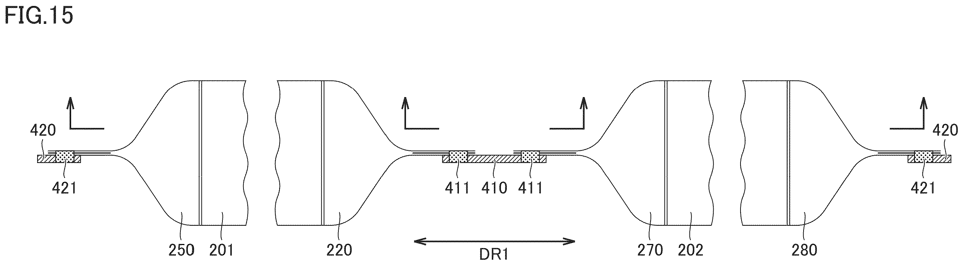

Negative electrode tab groups 220, 270 are joined to current collector 410 at joining locations 411 (see Fig. 15) described later. Each of joining locations 411 can be formed by laser welding or the like, for example.

Current collector 430 is joined to current collector 410 at a joining location located at its end portion in the Z direction. Current collector 430 is connected to negative electrode terminal 301. The connection between current collector 430 and negative electrode terminal 301 can be formed by swaging and/or welding, for example.

Negative electrode terminal 301 is exposed to the outside of sealing plate 120. Negative electrode terminal 301 is connected to a plate-shaped member 303. Negative electrode terminal 301 preferably includes a region 301A composed of copper or a copper alloy and a region 301B composed of aluminum or an aluminum alloy, and region 301A composed of copper or a copper alloy is preferably connected to current collector 430.

Plate-shaped member 303 is located on the outer side with respect to sealing plate 120. Plate-shaped member 303 is disposed along sealing plate 120. Plate-shaped member 303 has electric conductivity. Plate-shaped member 303 is disposed to secure an area of connection with a bus bar or the like that electrically connects secondary battery 1 and another secondary battery adjacent thereto. The connection between negative electrode terminal 301 and plate-shaped member 303 can be formed by, for example, laser welding or the like.

An insulating member 510 is disposed between plate-shaped member 303 and sealing plate 120. An insulating member 520 is disposed between negative electrode terminal 301 and sealing plate 120. An insulating member 530 is disposed between current collector 430 and sealing plate 120.

It should be noted that negative electrode terminal 301 may be electrically connected to sealing plate 120. Sealing plate 120 may function as negative electrode terminal 301.

A spacer 600 is disposed between sealing plate 120 and the main body portion (negative electrode tab groups 220, 270 are not included) of electrode assembly 200. Spacer 600 is composed of a resin member having an insulating property. Spacer 600 suppresses movement of electrode assembly 200 in case 100 in the X direction to suppress damages of negative electrode tab group 220, negative electrode tab group 270, electrode assembly 200, and the like.

As shown in Fig. 12 (connection structure on the positive electrode side), the connection structure between electrode assembly 200 and current collector 400 on the positive electrode side is different from that of the configuration on the negative electrode side in the following point: a portion corresponding to current collector 410 on the negative electrode side is constituted of two components.

First electrode assembly 201 includes positive electrode tab group 250. Positive electrode tab group 250 is electrically connected to a current collector 420 (positive electrode current collector) at its second end portion 206 in the X direction. Second electrode assembly 202 includes a positive electrode tab group 280. Positive electrode tab group 280 is electrically connected to current collector 420 at its fourth end portion 208 in the X direction.

Positive electrode tab group 250 has a curved portion 251 and a tip portion 252. Curved portion 251 is a portion at which positive electrode tab group 250 is curved. Tip portion 252 is a portion of positive electrode tab group 250 located at its end portion.

Positive electrode tab group 280 has a curved portion 281 and a tip portion 282. Curved portion 281 is a portion at which positive electrode tab group 280 is curved. Tip portion 282 is a portion of positive electrode tab group 280 located at its end portion.

Positive electrode tab group 250 and positive electrode tab group 280 are curved in opposite directions such that tip portions 252, 282 are close to each other. Tip portions 252, 282 are separated from each other in the present embodiment; however, it is not limited to this configuration, and tip portions 252, 282 may be in contact with each other.

Positive electrode current collector 400B electrically connects positive electrode terminal 302 to positive electrode tab group 250 and positive electrode tab group 280. Positive electrode current collector 400B in the present embodiment is connected to positive electrode terminal 302 between electrode assembly 200 and sealing plate 130.

Positive electrode current collector 400B includes current collector 420 and a current collector 440. Although an insulating member 460 is interposed between current collector 420 and current collector 440, current collector 420 and current collector 440 are electrically joined to each other at a position different from the cross section shown in the figure.

Current collector 420 is a plate-shaped member. Current collector 420 has a long-side direction in the Z direction and a short-side direction in the Y direction. Current collector 420 is constituted of one current collector and the other current collector. That is, current collector 420 is constituted of two components.

Positive electrode tab group 250 and positive electrode tab group 280 are joined, at below-described joining locations 421 (see Fig. 15), to current collector 420 constituted of the two components. Each of joining locations 421 can be formed by laser welding or the like, for example.

Current collector 440 is joined to current collector 420 at a joining location located at its end portion in the Z direction. Current collector 440 is connected to positive electrode terminal 302. The connection between current collector 440 and positive electrode terminal 302 may be formed by swaging and/or welding, for example.

Positive electrode terminal 302 is provided to be exposed to the outside of sealing plate 130 and reach current collector 440 of positive electrode current collector 400B provided on the inner surface side of sealing plate 130. Positive electrode terminal 302 is connected to a plate-shaped member 304.

Plate-shaped member 304 is located on the outer side with respect to sealing plate 130. Plate-shaped member 304 is disposed along sealing plate 130. Plate-shaped member 304 has electric conductivity. Plate-shaped member 304 is disposed to secure an area of connection with a bus bar or the like that electrically connects secondary battery 1 and another secondary battery adjacent thereto. The connection between positive electrode terminal 302 and plate-shaped member 304 can be formed by, for example, laser welding or the like.

An insulating member 510 is disposed between plate-shaped member 304 and sealing plate 130. An insulating member 520 is disposed between positive electrode terminal 302 and sealing plate 130. An insulating member 470 is disposed between current collector 440 and sealing plate 130.

It should be noted that positive electrode terminal 302 may be electrically connected to sealing plate 130. Sealing plate 130 may function as positive electrode terminal 302.

A spacer 600 is disposed between sealing plate 130 and the main body portion (positive electrode tab groups 250, 280 are not included) of electrode assembly 200. Spacer 600 is composed of a resin member having an insulating property. Spacer 600 suppresses movement of electrode assembly 200 in case 100 in the X direction to suppress damages of positive electrode tab groups 250, 280, electrode assembly 200, and the like.

Spacer 600 shown in each of Figs. 11 and 12 is composed of a resin, for example. Examples of the material of spacer 600 includes polypropylene (PP), polyphenylene sulfide (PPS), polybutylene terephthalate (PBT), ethylene-propylene-diene rubber (EPDM), and the like.

As shown in Figs. 11 and 12, insulating sheet 700 (electrode assembly holder) composed of a resin is disposed between electrode assembly 200 and case main body 110. Insulating sheet 700 may be composed of, for example, a resin. More specifically, the material of insulating sheet 700 is, for example, polypropylene (PP), polyethylene terephthalate (PET), polyphenylene sulfide (PPS), polyimide (PI), or polyolefin (PO).

### (Manufacturing Process for Secondary Battery 1)

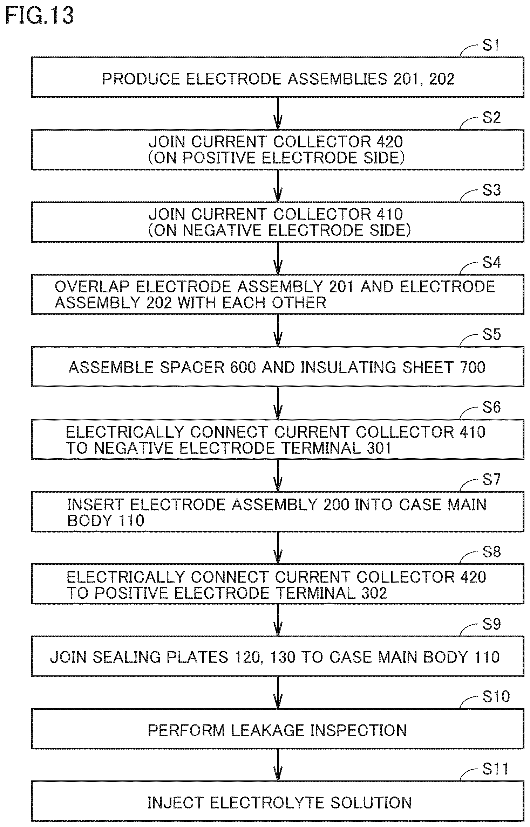

Hereinafter, a method of manufacturing the secondary battery according to the present embodiment will be described with reference to the flowchart of Fig. 13. In the method of manufacturing the secondary battery according to the present embodiment, first, first electrode assembly 201 and second electrode assembly 202 are produced (step S1). Parts of the tips of negative electrode tab group 220, positive electrode tab group 250, negative electrode tab group 270, and positive electrode tab group 280 are preferably cut such that they have the same tip length when bundled.

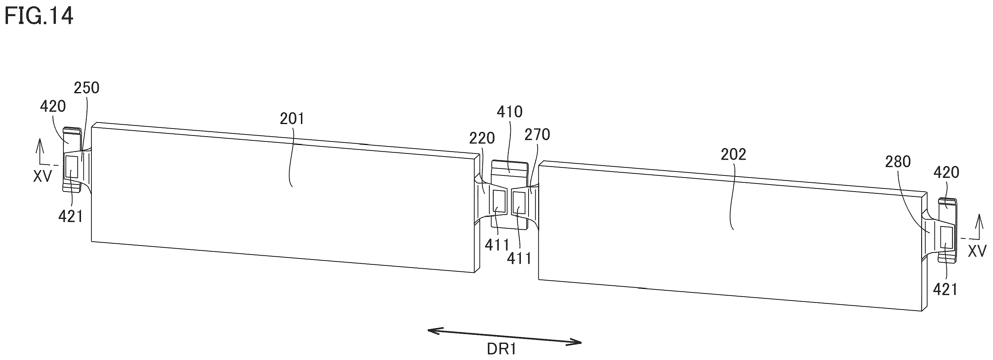

As shown in Figs. 14 and 15, after producing first electrode assembly 201 and second electrode assembly 202, each of positive electrode tab groups 250, 280 is joined to current collector 420 (step S2). Each of positive electrode tab groups 250, 280 is joined to current collector 420 at joining location 421.

Next, first electrode assembly 201, current collector 410, and second electrode assembly 202 are disposed side by side in this order in a DR1 direction. Negative electrode tab group 220 is disposed on one side with respect to current collector 410 in the DR1 direction. Negative electrode tab group 220 and negative electrode tab group 270 are joined to current collector 410 with negative electrode tab group 270 being disposed on the other side with respect to current collector 410 in the DR1 direction (step S3). Negative electrode tab group 220 and negative electrode tab group 270 are joined to current collector 410 at joining locations 411.

In the height direction of each of first electrode assembly 201 and second electrode assembly 202, each of current collector 410 and current collector 420 is disposed on one side with respect to the center of each of first electrode assembly 201 and second electrode assembly 202. Thus, each of the current collectors can be formed to be short, thereby reducing the size of the current collector. Each of current collector 410 and current collector 420 is not limited to this configuration. In the height direction of each of first electrode assembly 201 and second electrode assembly 202, each of current collector 410 and current collector 420 may be disposed at the center of a corresponding one of first electrode assembly 201 and second electrode assembly 202.

The order of the steps of joining current collector 410 and current collector 420 to first electrode assembly 201 and second electrode assembly 202 is not limited to the one described above, and the order may be changed. The step of joining current collector 420 to each of first electrode assembly 201 and second electrode assembly 202 is preferably performed before the below-described step of overlapping first electrode assembly 201 and second electrode assembly 202 with each other, and is preferably performed before the step of joining current collector 410 to first electrode assembly 201 and second electrode assembly 202.

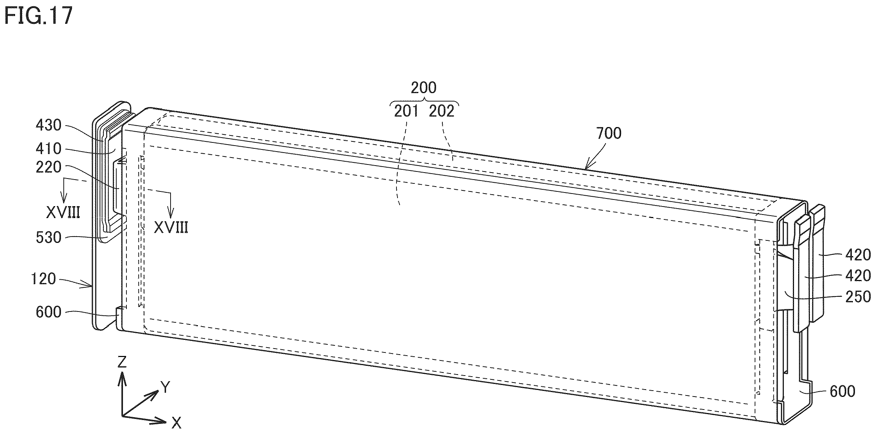

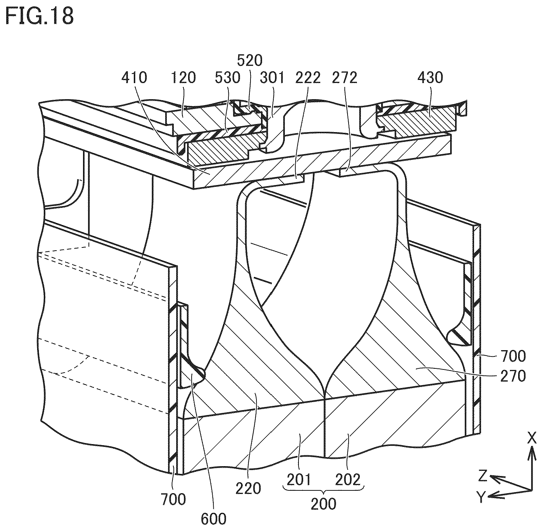

Next, after joining negative electrode tab group 220 and negative electrode tab group 270 to current collector 410, negative electrode tab group 220 and negative electrode tab group 270 are bent in the thickness direction (direction orthogonal to the DR1 direction in Figs. 17 and 18) of each of first electrode assembly 201 and second electrode assembly 202, thereby overlapping first electrode assembly 201 and second electrode assembly 202 with each other (step S4). That is, first electrode assembly 201 and second electrode assembly 202 are collected together.

Regarding the expression "overlapping the first electrode assembly and the second electrode assembly with each other", the first electrode assembly and the second electrode assembly may be overlapped with each other directly, or another member may be disposed between the first electrode assembly and the second electrode assembly. The first electrode assembly and the second electrode assembly may or may not be fixed by a tape or the like. Further, the first electrode assembly, the current collector, and the second electrode assembly may not be disposed on a straight line in the DR1 direction, and the first electrode assembly or the second electrode assembly may be inclined with respect to the current collector in the DR1 direction.

Negative electrode tab group 220 and negative electrode tab group 270 are bent such that the tip portions thereof face each other. Positive electrode tab group 250 and positive electrode tab group 280 are also bent such that the tip portions thereof face each other.

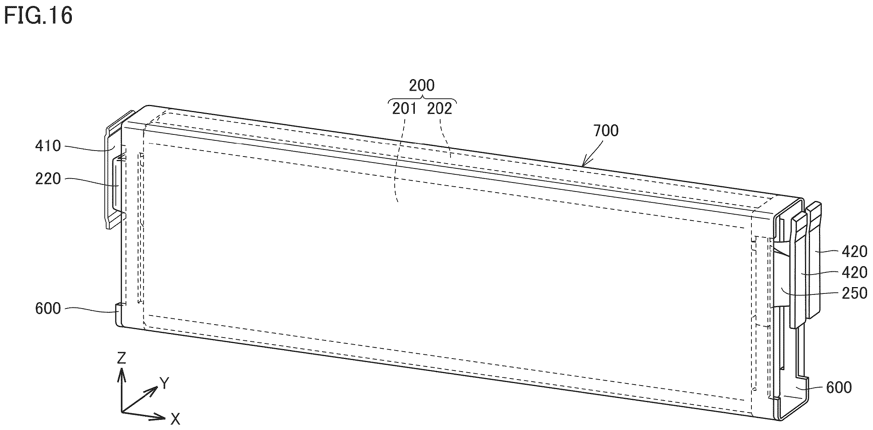

Next, as shown in Fig. 16, spacers 600 and insulating sheet 700 are assembled to electrode assembly 200 (step S5). After spacers 600 are assembled to electrode assembly 200 on the negative electrode side and the positive electrode side, electrode assembly 200 and spacers 600 on the both sides are covered with insulating sheet 700. Thus, electrode assembly 200 and spacers 600 on the both sides are covered with insulating sheet 700 with spacers 600 being disposed on the both sides with respect to electrode assembly 200. Insulating sheet 700 is fixed to spacers 600 on the both sides.

Next, as shown in Figs. 17 and 18, current collector 410 is electrically connected to negative electrode terminal 301 with current collector 430 being interposed therebetween (step S6). Step S6 can be performed before step S5. Specifically, as shown in Fig. 18, negative electrode tab group 220 and negative electrode tab group 270 are bent such that tip portions 222, 272 face each other.

Each of negative electrode terminal 301 and current collector 430 is attached to sealing plate 120 with an insulating member being interposed therebetween. Current collector 430 is brought into abutment with current collector 410 in the X direction. The connecting of plate-shaped member 303 to negative electrode terminal 301 may be performed at any timing. Current collector 430 and current collector 410 are joined to each other by laser welding from between sealing plate 120 and insulating sheet 700.

Next, spacer 600 and electrode assembly 200 are inserted into case main body 110 via opening 113 with the current collector 420 side being inserted first (step S7). In the present embodiment, after insulating member 460 is attached to two current collectors 420, electrode assembly 200 is inserted into case main body 110. In this way, electrode assembly 200 can be inserted into case main body 110 in a state in which two current collectors 420 are collected into one.

After electrode assembly 200 is inserted into case main body 110, negative electrode tab group 220 and negative electrode tab group 270 are curved by bringing sealing plate 120 close to the main body portion of electrode assembly 200 (first electrode assembly 201 and second electrode assembly 202) from the state in which negative electrode tab group 220 and negative electrode tab group 270 are extended (state shown in Fig. 11). Negative electrode tab group 220 and negative electrode tab group 270 are curved along the shape of spacer 600 such that the folded portions of curved portions 221, 271 are close to case main body 110 in the Y direction.

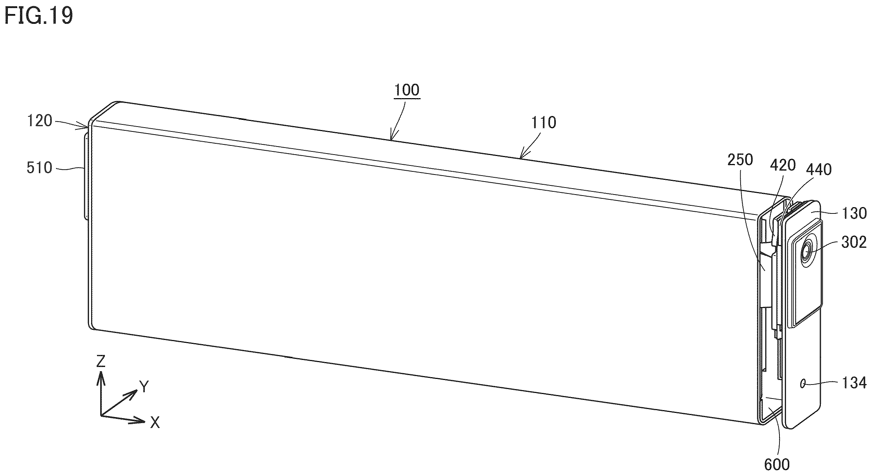

As shown in Fig. 19, after bringing sealing plate 120 into abutment with case main body 110, sealing plate 120 is temporarily joined to case main body 110. By the temporary joining, sealing plate 120 is partially joined to opening 113 of case main body 110. Thus, sealing plate 120 is positioned with respect to case main body 110.

When inserting electrode assembly 200 into case main body 110, electrode assembly 200 may be pulled from the current collector 420 side, or may be pushed from the current collector 410 side. When electrode assembly 200 is pushed from the current collector 410 side, negative electrode tab group 220 and negative electrode tab group 270 can be curved at the same time.

After electrode assembly 200 is inserted into case main body 110, current collector 420 is electrically connected to positive electrode terminal 302 (step S8). Specifically, positive electrode terminal 302 is attached to sealing plate 130 with an insulating member being interposed therebetween. After inserting first electrode assembly 201 and second electrode assembly 202 into case main body 110, current collector 440 is brought into abutment, in the X direction, with current collector 420 protruding from opening 114. The connecting of plate-shaped member 304 to positive electrode terminal 302 may be performed at any timing.

Positive electrode tab group 250 (first tab group) and positive electrode tab group 280 (second tab group) connected to current collector 420 are bent such that tip portions 252, 282 face each other. As shown in Fig. 12, positive electrode tab group 250 and positive electrode tab group 280 are curved along the shape of spacer 600 such that the folded portions of curved portions 251, 281 are close to case main body 110 in the Y direction.

After spacer 600 and electrode assembly 200 are inserted into case main body 110, sealing plate 130 and sealing plate 120 are joined to case main body 110 (step S9).

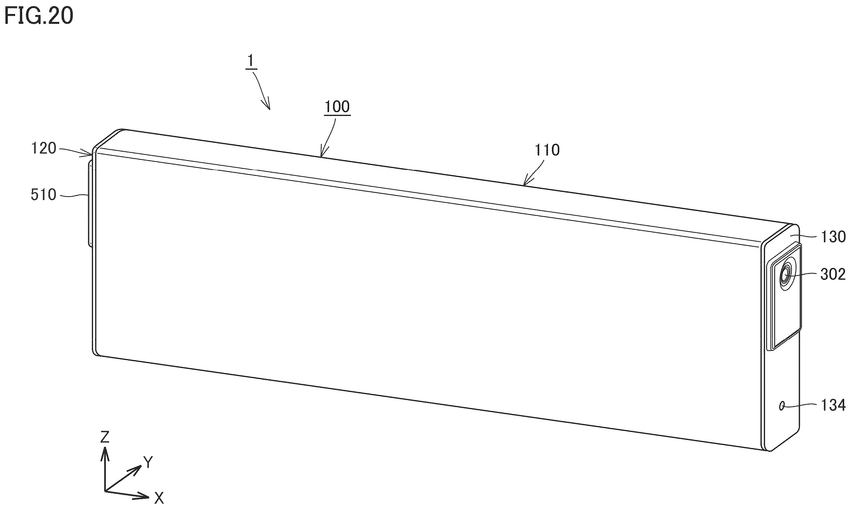

As shown in Fig. 20, after sealing plate 130 is brought into abutment with case main body 110, sealing plate 130 is temporarily welded to case main body 110. By the temporary joining, sealing plate 130 is partially joined to opening 114 of case main body 110. Thus, sealing plate 130 is positioned with respect to case main body 110.

Next, sealing plate 120 and sealing plate 130 are joined to case main body 110. Sealing plate 120 seals opening 113 of case main body 110, and sealing plate 130 seals opening 114 of case main body 110. Thus, first electrode assembly 201 and second electrode assembly 202 are accommodated in case 100.

After the above-described steps, an inspection such as a leakage inspection is performed (step S10). After the leakage inspection, secondary battery 1 is dried to remove moisture in case 100.

Next, the electrolyte solution is injected into case 100 via injection hole 134 provided in sealing plate 130 in a state in which sealing plate 130 is disposed on the upper side with respect to sealing plate 120 and spacer 600 is disposed on the lower side with respect to electrode assembly 200 in the vertical direction (step S11). Since spacer 600 is provided around the portion via which the electrolyte solution is injected, electrode assembly 200 or the like is suppressed from being damaged even when the electrolyte solution is vigorously injected into case 100. Thus, in secondary battery 1 according to the present embodiment, the electrolyte solution can be injected in a shorter period of time than that in a case where spacer 600 is not provided. Thereafter, charging is performed to result in release of gas. For performing the charging to result in release of gas, injection hole 134 may be temporarily sealed. Thereafter, injection hole 134 is sealed, thereby completing secondary battery 1.

### (Connection between Insulating Member 460 and Current Collector 420)

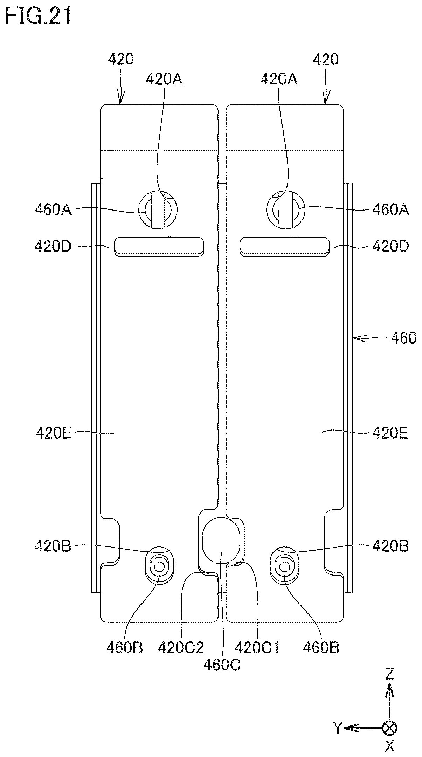

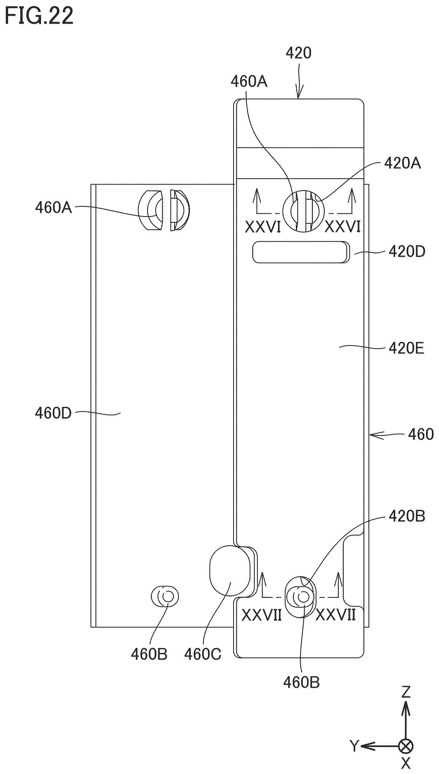

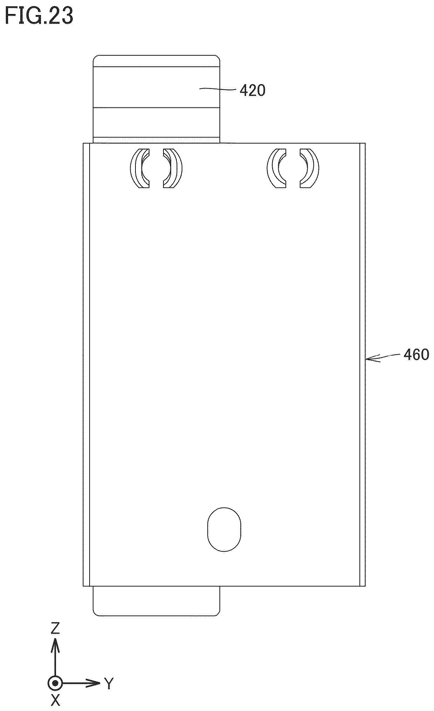

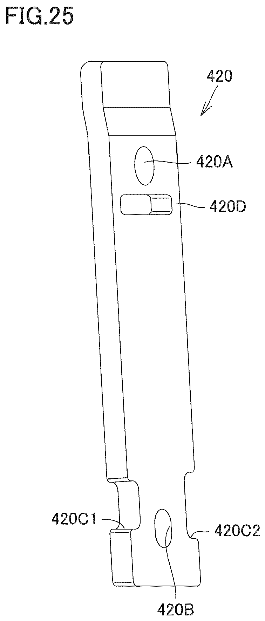

As shown in Figs. 21 to 25, two current collectors 420 (first conductive member) are connected to one insulating member 460. Two current collectors 420 (a first member and a second member) are joined to positive electrode tab groups 250, 280 (the first tab group and the second tab group). However, the scope of the present technology is not limited thereto, and one current collector 420 may be connected to one insulating member 460.

Two current collectors 420 preferably have the same shape. Two current collectors 420 are preferably provided to be separated from each other. However, two current collectors 420 may be in contact with each other.

Each of current collectors 420 is a plate-shaped member having a long-side direction in the Z axis direction and a short-side direction in the Y axis direction. Current collector 420 is composed of a metal, and aluminum or an aluminum alloy is preferably used therefor, for example.

Current collector 420 is provided with a through hole 420A (first through hole), a through hole 420B (second through hole), recesses 420C1, 420C2, a fuse portion 420D, and a plate-shaped portion 420E (first plate-shaped portion).

Insulating member 460 includes a projection 460A (first projection), a projection 460B (second projection), a projection 460C (third projection), and a plate-shaped portion 460D (second plate-shaped portion).

Plate-shaped portion 420E of current collector 420 is disposed to overlap plate-shaped portion 460D of insulating member 460. Projection 460A of insulating member 460 is disposed in through hole 420A of current collector 420. Thus, current collector 420 and insulating member 460 are fixed or connected to each other.

Through hole 420A of current collector 420 is used for connection between current collector 420 and insulating member 460. It should be noted that no clearance is preferably present between a stem portion 460A1 and the inner wall of through hole 420A. Alternatively, the clearance between stem portion 460A1 and the inner wall of through hole 420A is preferably as small as possible. When the clearance is present between stem portion 460A1 and the inner wall of through hole 420A, the clearance is preferably about 0.5 mm or less, is more preferably about 0.3 mm or less, and is further preferably about 0.2 mm or less.

When joining current collector 420 and current collector 440 to each other, current collector 420 and current collector 440 are preferably aligned with each other in the Z direction. Thus, current collector 420 and current collector 440 can be stably joined to each other, thereby attaining high reliability of the joining portion.

It should be noted that the shape of through hole 420A is not limited to an exactly circular shape, and may be an elliptical shape, an oval shape, or the like, or may be a polygonal shape such as a substantially square shape or a substantially rectangular shape. Moreover, the shape of through hole 420A may be a polygonal shape having each corner with a curvature. When through hole 420A has a major axis direction or a long-side direction, the major axis direction or the long-side direction is preferably along a direction (Z direction) in which projection 460A and projection 460B are arranged side by side. It should be noted that the shape of through hole 420A is particularly preferably an exactly circular shape or a shape close thereto (for example, a circular shape in which the minor axis / the major axis = about 0.8 to 1.0).

A relation between projection 460B and through hole 420B can be set to permit a larger positional deviation than that in a relation between projection 460A and through hole 420A at least in the width direction (Y direction) of current collector 420. On this occasion, a play (clearance) between projection 460B and through hole 420B is larger than a play between projection 460A and through hole 420A. Projection 460B and through hole 420B can function as a guide portion when attaching current collector 420 to insulating member 460. Moreover, projection 460B and through hole 420B can suppress current collector 420 from being largely deviated in position with respect to insulating member 460. It should be noted that a protruding height of projection 460B is preferably higher than a protruding height of projection 460A. With this, the function of projection 460B as a guide portion is improved.

It should be noted that the clearance between projection 460B and the inner wall of through hole 420B (largest clearance) is preferably about 0.3 mm or more, more preferably about 0.5 mm or more, and further preferably about 1 mm or more. It should be noted that the largest clearance among the clearances between projection 460B and the inner wall of through hole 420B is preferably provided in the Z direction.

It should be noted that the shape of through hole 420B is not limited to an oval shape, and may be an exactly circular shape, an elliptical shape, or a polygonal shape such as a substantially square shape or a substantially rectangular shape. Moreover, the shape of through hole 420B may be a polygonal shape having each corner with a curvature. When through hole 420B has a major axis direction or a long-side direction, the major axis direction or the long-side direction is preferably along a direction (Z direction) in which projection 460A and projection 460B are arranged side by side.

However, through hole 420A can be provided in current collector 420 instead of through hole 420B, projection 460A can be provided in insulating member 460 instead of projection 460B, and projection 460A can be inserted into through hole 420A. In this case, since current collector 420 and insulating member 460 can be fixed or connected to each other at two portions on the upper and lower sides, they can be held to each other more stably.

Recess 420C1 and recess 420C2 are notch portions (constricted portions) provided at the end portions of current collector 420 in the width direction (Y direction) of current collector 420, respectively. It should be noted that recess 420C1 and recess 420C2 can be provided at substantially the same position in the length direction (Z direction) of current collector 420. Recesses 420C1, 420C2 are formed to have shapes different from each other. Thus, recesses 420C1, 420C2 can be provided with a function for visually determining an orientation of current collector 420 (suppressing the front and rear sides of current collector 420 from being wrongly recognized).

Fuse portion 420D is formed to reduce the cross sectional area of current collector 420. Fuse portion 420D can also be constituted of a notch portion, a thin portion, or the like, in addition to the implementation of the through hole exemplified in the present embodiment. Fuse portion 420D can be melted and disconnected when a current having a predetermined value or more flows therein, thereby cutting the conduction path. It should be noted that the length of the through hole provided in fuse portion 420D is preferably larger than the length of through hole 420A in the width direction (Y direction) of current collector 420.

Insulating member 460 is preferably composed of a resin. For example, a resin such as PP (Polypropylene), PFA (Perfluoroalkoxy alkane), FEP (Fluorinated Ethylene Propylene), PPS (Polyphenylene sulfide), or EPDM (Ethylene Propylene Diene Methylene linkage) can be used.

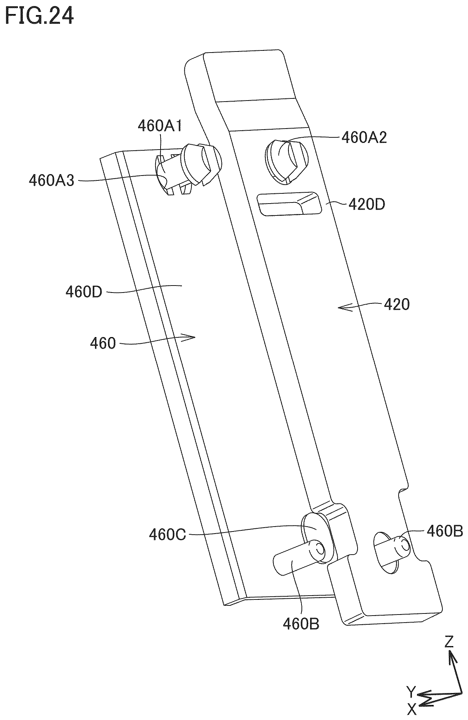

As shown in Fig. 24, projection 460A of insulating member 460 has a pair of stem portions 460A1 (first portion) and a pair of diameter-increased portions 460A2 (second portion). A slit is provided between the pair of stem portions 460A1. The pair of stem portions 460A1 are inserted into through hole 420A of current collector 420. The pair of diameter-increased portions 460A2 are provided at the tips of the pair of stem portions 460A1, respectively. The outer diameter of the total of the pair of diameter-increased portions 460A2 (including the slit present between the pair of diameter-increased portions 460A2) is larger than the outer diameter of the total of the pair of stem portions 460A1. When inserting stem portions 460A1 into through hole 420A, each of stem portions 460A1 is deformed to be inclined radially inward. With this, each of diameter-increased portions 460A2 can pass through through hole 420A. The tip of projection 460A (diameter-increased portion 460A2) preferably has a curved surface shape by which the insertion into through hole 420A can be guided.

A through hole 460A3 is formed in a root portion of stem portion 460A1. Through hole 460A3 is formed in a region including diameter-increased portion 460A2 when viewed in the X direction. Thus, insulating member 460 can be readily molded integrally.

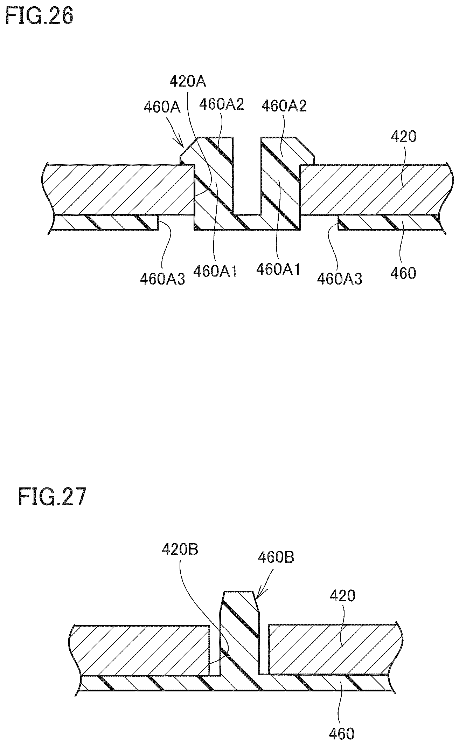

As shown in Fig. 26, in projection 460A, diameter-increased portion 460A2, which is a portion protruding on the outer side (-X side) with respect to through hole 420A, protrudes on the outer diameter side with respect to the edge portion of through hole 420A in the radial direction of through hole 420A. Moreover, the surface of diameter-increased portion 460A2 on the stem portion 460A1 side (+X side) faces (is preferably in abutment with) the outer surface of current collector 420 in the thickness direction. With such a configuration, current collector 420 and insulating member 460 are relatively firmly fixed or connected to each other by projection 460A.

As shown in Fig. 27, the outer diameter of projection 460B at its portion protruding on the outer side (-X side) with respect to through hole 420B is smaller than the inner diameter of through hole 420B. That is, the portion of projection 460B protruding with respect to through hole 420B does not protrude on the outer side with respect to the edge portion of through hole 420B in the radial direction of through hole 420B. Further, a clearance larger than the clearance between projection 460A and the inner wall of through hole 420A is formed between projection 460B and the inner wall of through hole 420B. Thus, it is possible to effectively suppress a decrease in assemblability of insulating member 460 to current collector 420.

After stem portion 460A1 is inserted into through hole 420A and the shape of stem portion 460A1 is returned to its original shape, diameter-increased portion 460A2 is disposed outside through hole 420A and functions as a fixing portion between current collector 420 and insulating member 460. On this occasion, diameter-increased portion 460A2 is in abutment with the outer surface of current collector 420 or faces the outer surface of current collector 420 with a slight clearance being interposed therebetween in the thickness direction of current collector 420. The width of the clearance (in the thickness direction of current collector 420) is preferably about 0.5 mm or less, more preferably about 0.3 mm or less, and further preferably about 0.1 mm or less.

Projection 460A is formed on the upper end (one end portion) side of current collector 420, and projection 460B is formed on the lower end (the other end portion) side of current collector 420. Projection 460A is preferably provided close to a welding portion (joining portion 800 described later) between current collector 420 and current collector 440 with respect to projection 460B.

For example, projection 460A is preferably disposed at a position close to the welding portion (joining portion 800 described later) between current collector 420 and current collector 440 with respect to the portion at which positive electrode tab groups 250, 280 are joined in current collector 420. Further, for example, a distance in the Z direction from the upper end portion (end portion on the +Z side) of joining portion 800 to the center of projection 460A is preferably about 20 mm or less, more preferably about 15 mm or less, and further preferably about 10 mm or less.

By fixing or connecting current collector 420 and insulating member 460 in the vicinity of joining portion 800, current collectors 420, 440 can be stably aligned with each other when joining current collectors 420, 440, with the result that the reliability of joining portion 800 can be improved.

The implementation of projection 460A is not limited to the example described above. For example, projection 460A is not limited to being divided into two, and projection 460A may be constituted of one protuberance, i.e., one stem portion and one diameter-increased portion. Moreover, for example, projection 460A may be press-fitted into through hole 420A of current collector 420. Moreover, diameter-increased portion 460A2 may be formed by inserting projection 460A into through hole 420A and then deforming projection 460A by heat swaging or the like.

A portion of projection 460C is disposed in recess 420C1 of one current collector 420, and a portion thereof is disposed in recess 420C2 of the other current collector 420. A protruding height of projection 460C is preferably lower than a protruding height of each of projections 460A, 460B. Moreover, the protruding height of projection 460C is preferably smaller than the thickness of current collector 420.

In secondary battery 1 according to the present embodiment, by connecting, to insulating member 460, current collectors 420 joined to positive electrode tab groups 250, 280, it is possible to suppress occurrence of unintended deformation of positive electrode tab groups 250, 280 when inserting electrode assembly 200 into case main body 110 with the positive electrode tab groups 250, 280 side being inserted first. Therefore, damage of each of positive electrode tab groups 250, 280 can be suppressed. Therefore, secondary battery 1 has high reliability.

Moreover, since a positional relation between current collector 420 and current collector 440 can be stabilized through insulating member 460, it is possible to improve reliability of joining current collector 420 and current collector 440 after electrode assembly 200 is inserted into case main body 110. As a result, secondary battery 1 having higher reliability can be obtained.

### (Disposition of Current Collector 440 on Insulating Member 470)

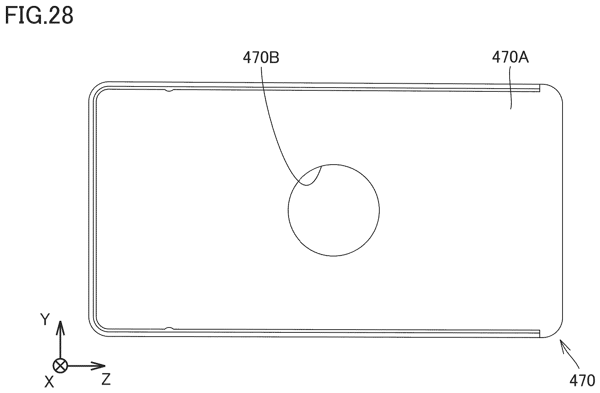

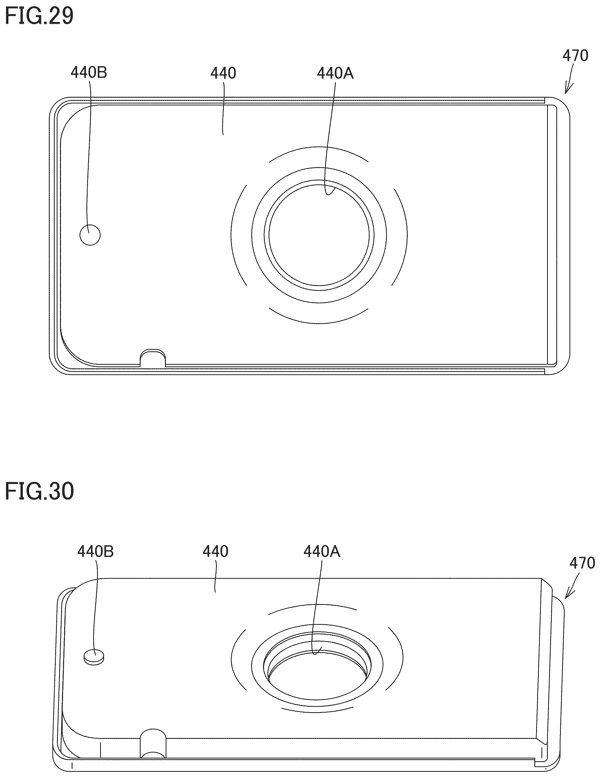

As shown in Figs. 28 to 30, each of insulating member 470 and current collector 440 (second conductive member) has a long-side direction in the Z axis direction and a short-side direction in the Y axis direction.

Insulating member 470 includes a base portion 470A and is provided with a through hole 470B. Base portion 470A is formed to have a plate shape and is disposed along sealing plate 130. Therefore, base portion 470A extends along the Y-Z plane in a state in which insulating member 470 is attached to sealing plate 130. Base portion 470A is disposed between current collector 440 and sealing plate 130. Positive electrode terminal 302 is inserted into through hole 470B.

Current collector 440 is a plate-shaped member provided with a through hole 440A and a protuberance 440B. Current collector 440 is composed of a metal, and aluminum or an aluminum alloy is preferably used therefor, for example. Current collector 440 is disposed on insulating member 470. Through hole 440A of current collector 440 communicates with through hole 470B of insulating member 470. Positive electrode terminal 302 is inserted into through hole 440A. Protuberance 440B of current collector 440 may be fitted into a recess or hole (not shown) formed in insulating member 460 so as to contribute to alignment between current collector 440 and insulating member 460.

### (Current Collection Structure on Positive Electrode Side)

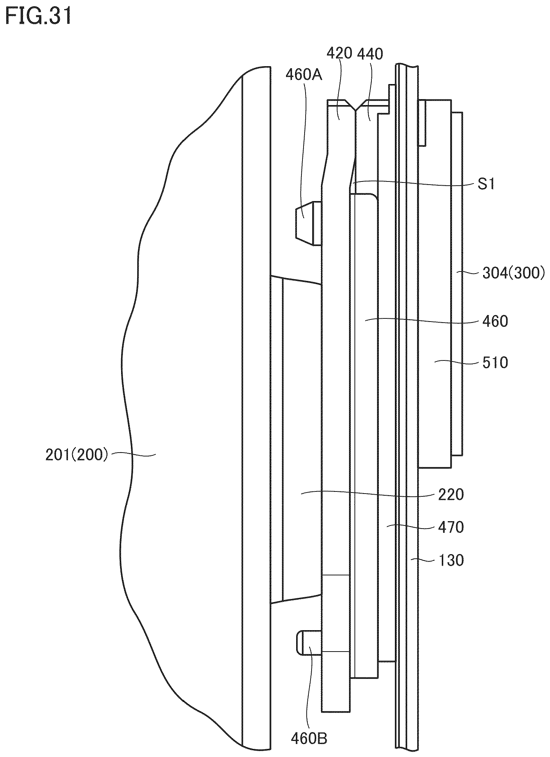

As shown in Fig. 31, insulating member 460 connected to each of current collectors 420 is overlapped with current collector 440 attached to sealing plate 130 together with insulating member 470. On this occasion, current collector 420 and current collector 440 are in abutment with each other on the upper end portion side. Insulating member 470 is disposed between sealing plate 130 and current collector 440.

A stepped portion is formed in at least one of current collectors 420, 440 (current collector 420 in the example of Fig. 31). Thus, a clearance S1 having a tapered shape is formed between current collectors 420, 440. Clearance S1 is gradually decreased in size toward the upper side of each of current collectors 420, 440. Clearance S1 has a region in which insulating member 460 is not disposed. By providing clearance S1, heat generated when forming the joining portion between current collectors 420, 440 can be suppressed from being transferred to the lower side of each of current collectors 420, 440, with the result that the joining portion between current collectors 420, 440 can be stably formed and heat transferred to positive electrode tab groups 250, 280, electrode assembly 200, and other conductive members can be reduced.

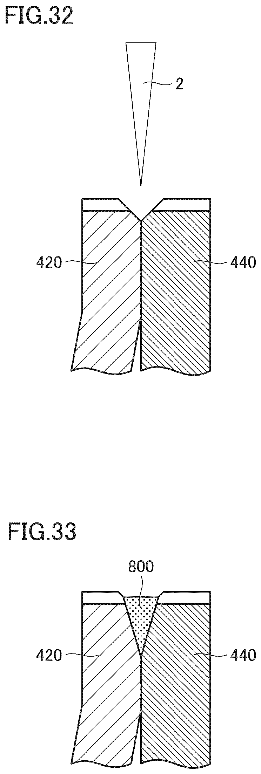

As shown in Figs. 32 and 33, an energy ray 2 is applied to the upper end portion (first end portion) of current collector 420 and the upper end portion (second end portion) of current collector 440, thereby forming joining portion 800 (welding portion) that joins current collectors 420, 440. Thus, current collector 420 and positive electrode terminal 302 are electrically connected to each other. Preferably, current collectors 420, 440 are joined to each other by welding. More preferably, current collectors 420, 440 are joined to each other by laser welding, for example. Energy ray 2 is preferably applied from between case main body 110 and sealing plate 130.

In the example illustrated in the present embodiment, joining portion 800 is formed at the end portion of each of current collectors 420, 440 on the +Z side, but the location at which joining portion 800 is formed is not limited thereto. As shown in Fig. 33, the center (deepest portion) of joining portion 800 preferably coincides with a boundary between current collectors 420, 440. However, the center of joining portion 800 may be slightly deviated to the current collector 420 side (-X side) or the current collector 440 side (+X side) from the state shown in Fig. 33.

When assembling sealing plate 130 to case main body 110, joining portion 800 is pushed into case main body 110. After sealing plate 130 is assembled to case main body 110, joining portion 800 faces the inner surface (second side surface portion 112B) of case main body 110.

**In** secondary battery 1 according to the present embodiment, joining portion 800 is formed by applying energy ray 2 to each of current collectors 420, 440 outside case main body 110, and then joining portion 800 is pushed into case main body 110. **In** this way, secondary battery 1 having a high energy density can be obtained while suppressing generation of a foreign matter and damage of the insulating member.

As shown in Fig. 31, in the positive electrode current collection structure, current collector 420 protrudes on the lower side with respect to insulating member 460 (on the side opposite to joining portion 800). Moreover, insulating member 460 protrudes on the lower side with respect to current collector 440 (on the side opposite to joining portion 800).

Since current collector 420 protrudes on the lower side with respect to insulating member 460, each of current collectors 420, 440 can be readily aligned in the height direction (Z direction) by providing a jig for alignment at the upper end portion of each of current collectors 420, 440 and pushing up current collector 420 from the lower side in the step of joining current collectors 420, 440. Thus, it is possible to improve the reliability of joining portion 800 between current collectors 420, 440.

Moreover, since insulating member 460 protrudes on the lower side with respect to current collector 440, it is possible to stably secure insulation between current collectors 420, 440.

### (Dimensional Relation between Through Hole 420B and Projection 460B)

A fitting clearance between through hole 420B and projection 460B is preferably about 0.3 mm or more, and more preferably about 1 mm or more.

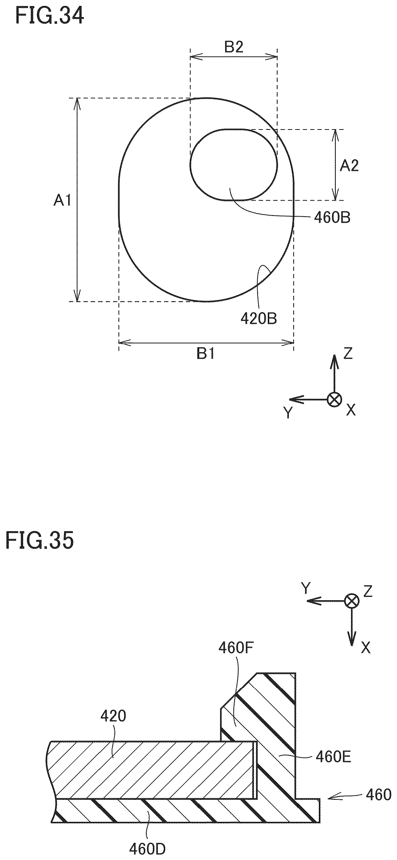

In the Z direction (direction in which the inner diameter of through hole 420B becomes maximum), a relation between the inner diameter (Fig. 34: A1) of through hole 420B and the outer diameter (Fig. 34: A2) of projection 460B is preferably such that A2/A1 is about 0.9 or less, is more preferably such that A2/A1 is about 0.8 or less, and is further preferably such that A2/A1 is about 0.7 or less. Moreover, A2/A1 is preferably about 0.2 or more.

In the Y direction (direction in which the inner diameter of through hole 420B becomes minimum), a relation between the inner diameter (Fig. 34: B1) of through hole 420B and the outer diameter (Fig. 34: B2) of projection 460B is preferably such that B2/B1 is about 0.9 or less, is more preferably such that B2/B1 is about 0.8 or less, and is further preferably such that B2/B1 is about 0.7 or less. Moreover, B2/B1 is preferably about 0.2 or more.

### (Modification)

In the present technology, the implementation of the connection between current collector 420 and insulating member 460 is not limited to the implementation described above. For example, in a modification shown in Fig. 35, insulating member 460 has a stem portion 460E protruding from plate-shaped portion 460D and a claw portion 460F provided at the tip of stem portion 460E. Claw portion 460F faces the outer surface of current collector 420 and is engaged with current collector 420 in the example of Fig. 35. Thus, current collector 420 and insulating member 460 are connected or fixed to each other. However, a slight clearance may be present between claw portion 460F and current collector 420.

Claw portion 460F is preferably provided on each of both sides with respect to current collector 420 in the Y direction. Thus, stable connection between current collector 420 and insulating member 460 can be realized.

Although the embodiments of the present invention have been described and illustrated in detail, it is clearly understood that the same is by way of illustration and example only and is not to be taken by way of limitation. The scope of the present invention is defined by the terms of the claims, and is intended to include any modifications within the scope and meaning equivalent to the terms of the claims.

## Claims

1. A power storage device comprising:
an electrode assembly (200) including a first electrode (240), a second electrode (210) having a polarity different from a polarity of the first electrode (240), and a first electrode tab group (250, 280) electrically connected to the first electrode (240);
a case (100) that accommodates the electrode assembly (200);
a first conductive member (420) connected to the first electrode tab group (250, 280);
a second conductive member (440) connected to the first conductive member (420); and
an insulating member (460) disposed between the first conductive member (420) and the second conductive member (440), wherein
the first electrode tab group (250, 280) is located at one end portion of the electrode assembly (200), and
the insulating member (460) is connected to the first conductive member (420).

2. The power storage device according to claim 1, wherein
the first conductive member (420) includes a first plate-shaped portion (420E),
the insulating member (460) includes a second plate-shaped portion (460D), and
the first plate-shaped portion (420E) of the first conductive member (420) is disposed to overlap the second plate-shaped portion (460D) of the insulating member (460).

3. The power storage device according to claim 1 or 2, wherein
the first conductive member (420) has a first end portion,
the second conductive member (440) has a second end portion adjacent to the first end portion, and
a welding portion (800) that joins the first conductive member (420) and the second conductive member (440) is formed at the first end portion and the second end portion.

4. The power storage device according to claim 1 or 2, wherein
the first conductive member (420) is provided with a first through hole (420A),
the insulating member (460) has a first projection (460A), and
a fixing portion that fixes the first conductive member (420) and the insulating member (460) to each other is formed by the first projection (460A) being disposed in the first through hole (420A).

5. The power storage device according to claim 4, wherein
the first conductive member (420) is provided with a second through hole (420B),
the insulating member (460) has a second projection (460B), and
the second projection (460B) is disposed in the second through hole (420B) so as to form a clearance between an outer surface of the second projection (460B) and an inner surface of the second through hole (420B).

6. The power storage device according to claim 4, wherein
the first conductive member (420) has an outer surface located on a side opposite to the insulating member (460),
the first projection (460A) has a first portion (460A1) disposed in the first through hole (420A), and a second portion (460A2) that has an outer diameter larger than an outer diameter of the first portion (460A1) and that is disposed on a tip side of the first projection (460A) with respect to the first portion (460A1),
the second portion (460A2) is disposed on an outer side with respect to the first through hole (420A) of the first conductive member (420), and
the second portion (460A2) of the first projection (460A) and the outer surface of the first conductive member (420) are in abutment with each other or face each other with a clearance of 0.5 mm or less being interposed between the second portion (460A2) of the first projection (460A) and the outer surface of the first conductive member (420).

7. The power storage device according to claim 4, wherein a plurality of the fixing portions are provided.

8. The power storage device according to claim 1 or 2, wherein
the first conductive member (420) has a first end portion, and is provided with a first through hole (420A) and a second through hole (420B),
the second conductive member (440) has a second end portion adjacent to the first end portion, a first projection (460A), and a second projection (460B),
a welding portion (800) that joins the first conductive member (420) and the second conductive member (440) is formed at the first end portion and the second end portion,
a fixing portion that fixes the first conductive member (420) and the insulating member (460) to each other is formed by the first projection (460A) being disposed in the first through hole (420A),
the second projection (460B) is disposed in the second through hole (420B) so as to form a clearance between an outer surface of the second projection (460B) and an inner surface of the second through hole (420B), and
the first through hole (420A) is disposed close to the welding portion (800) with respect to the second through hole (420B).

9. The power storage device according to claim 1 or 2, wherein
a joining portion between the first conductive member (420) and the second conductive member (440) is provided on one end portion side of each of the first conductive member (420) and the second conductive member (440),
the first conductive member (420) protrudes on a side opposite to the joining portion with respect to the insulating member (460), and
the insulating member (460) protrudes on the side opposite to the joining portion with respect to the second conductive member (440).

10. The power storage device according to claim 1 or 2, wherein
the first conductive member (420) has an outer surface located on a side opposite to the insulating member (460),
the insulating member (460) has a claw portion (460F) facing the outer surface of the first conductive member (420), and
a fixing portion that fixes the first conductive member (420) and the insulating member (460) to each other is formed by the claw portion (460F).

11. The power storage device according to claim 1 or 2, wherein
the first electrode tab group (250, 280) includes a first tab group (250) and a second tab group (280) that are separately formed,
the first conductive member (420) includes a first member and a second member provided as separate members,
the first member is joined to the first tab group (250), and the second member is joined to the second tab group (280), and
the first member and the second member are connected to one insulating member (460).
